# EUROPÄISCHE PATENTSCHRIFT

(11) **EP 2 371 054 B1**
(45) Veröffentlichungstag und Bekanntmachung des Hinweises auf die Patenterteilung: **03.07.2013**
(21) Anmeldenummer: 09765022.0
(22) Anmeldetag: 23.11.2009
(51) Int. Cl.: H02P 3/18, H02P 3/26

(54) **UMRICHTER**
CONVERTER
CONVERTISSEUR

(30) Priorität: 26.11.2008 DE 102008059093
(43) Veröffentlichungstag der Anmeldung: 05.10.2011
(73) Patentinhaber: SEW-EURODRIVE GmbH & Co. KG, 76646 Bruchsal (DE)
(72) Erfinder: MÖHRING, Jens, 76703 Kraichtal (DE); JÄCKEL, Thomas, 76646 Bruchsal (DE)
(86) Internationale Anmeldenummer: PCT/EP2009/008318
(87) Internationale Veröffentlichungsnummer: WO 2010/060585

(56) Entgegenhaltungen:
- CN-A- 101 188 378
- JP-A- 5 328 735
- JP-A- 2008 017 553
- US-A- 4 263 535
- US-A1- 2004 160 201
- US-A1- 2004 223 301

## Beschreibung

Die Erfindung betrifft einen Umrichter.

Es ist bekannt Drehstrommotoren mittels Umrichtern zu speisen, die eine Drehspannung mit vorgebbarer Frequenz bereit stellen. Diese Umrichter werden vorzugsweise aus dem Drehstromnetz versorgt.

Aus der JP 2008017553 ist bekannt, mehrere Motoren aus jeweils zugeordneten Endstufen zu speisen, wobei jede Endstufe drei, aus einem Zwischenkreis versorgte Halbbrücken von Leistungshalbleiterschaltern aufweist.

Aus der JP 5328735 ist bekannt, die Endstufe aus drei Halbbrücken von Leistungshalbleiterschaltern aufzubauen.

Aus der CN 101188378 ist bekannt, die Endstufe aus drei Halbbrücken von Leistungshalbleiterschaltern aufzubauen.

Der Erfindung liegt daher die Aufgabe zugrunde, einen Umrichter einfacher und in Bezug auf die Betriebskosten insgesamt kostengünstiger weiterzubilden.

Erfindungsgemäß wird die Aufgabe bei dem Umrichter nach den in Anspruch 1 angegebenen Merkmalen gelöst.

Wichtige Merkmale der Erfindung bei dem Umrichter zur Speisung eines Motors sind, dass er
- ein Steuerelektronikmodul zur Erzeugung von Ansteuersignalen für ansteuerbare Halbleiterschalter, insbesondere Leistungshalbleiterschalter,
- mit jeweils einer Motorzuleitung verbundene Phasenmodule, umfassend Halbleiterschalter,
- ein Bremschoppermodul mit ansteuerbarem Halbleiterschalter,
umfasst, wobei
zwischen dem Steuerelektronikmodul und einem Kopplungsmodul eine erste Schnittstelle zur Signalübermittelung vorgesehen ist
und zwischen dem Kopplungsmodul und dem Bremschoppermodul sowie zwischen dem Kopplungsmodul und jedem Phasenmodul jeweils eine zweite Schnittstelle zur Signalübertragung ausgeführt ist.

Von Vorteil ist dabei, dass Umrichter mit großen Leistungen von beispielsweise mehr als 50kW oder sogar 100kW modular aufbaubar sind. Auf diese Weise sind im Wartungsfall oder Fehlerfall das jeweilige Modul schnell und einfach austauschbar. Da das jeweilige Modul mit Ausnahme des Steuerelektronikmoduls nur einfach aufgebaut ist, also mit wenig komplexen Strukturen ausgeführt ist, ist eine hohe Übersichtlichkeit erreichbar und somit ein einfaches und schnelles Austauschen möglich. Insbesondere ist durch das zentral zwischengeordnet vorgesehene Kopplungsmodul ein Ermitteln der jeweiligen Fehlerquelle in einfacher Weise erreichbar. Auch sind vom Kopplungsmodul selbst Überwachungen und logische Überprüfungen unabhängig von der Software oder Hardware des Steuerelektronikmoduls ermöglicht. Auf diese Weise ist also auch eine erhöhte Sicherheit erreichbar. Des Weiteren ist mittels des Kopplungsmoduls eine Verbindungseinheit realisierbar, die Steuersignale und Daten durchleitet. Die verbundenen Module sind klein und kompakt und daher kostengünstig ausführbar. Das Durchleiten mittels des Kopplungsmoduls ermöglicht daher nicht nur ein Überwachen der durchgeleiteten Signale und Daten sondern auch ein Vergleichen und logisches Miteinander Verknüpfen der für verschiedene Module bestimmten Daten und Signale. Auf diese Weise ist also ein Feststellen von Fehlern auf dem Kopplungsmodul ermöglicht. Darüber hinaus ist die Fehlerquelle, also beispielsweise das entsprechende Modul bestimmbar. Mit Anzeigeelementen und/oder über Weiterleitung entsprechender Daten an das Steuerelektronikmodul und von dort über Datenbusverbindungen an weitere elektronische Geräte, wie zentraler Rechner oder dergleichen, ist somit eine schnelle und einfache Meldung an einen Bediener oder ein Auslösen einer entsprechend zugeordneten Aktion innerhalb der Maschine oder Anlage ermöglicht.

Des weiteren sind auch innerhalb der jeweiligen Module Mittel zur Bestimmung und/oder Überwachung von Werten physikalischer Größen vorsehbar. Die bestimmten Wert sind somit direkt ans Kopplungsmodul übermittelbar und dort anzeigbar oder auswertbar.

Bei einer vorteilhaften Ausgestaltung ist die erste und/oder zweite Schnittstelle zur Übertragung von Ansteuersignalen sowie zur Übertragung von Meldungen, insbesondere Fehlermeldungen, geeignet ausgeführt. Von Vorteil ist dabei, dass nicht nur die durchzuleitenden Signale und/oder Daten sondern auch Fehlermeldungen, die mittels der auf dem Kopplungsmodul vorgesehenen Mittel anzeigbar oder weiterverarbeitbar sind.

Bei einer vorteilhaften Ausgestaltung weist das Kopplungsmodul Mittel zum Vergleichen von Ansteuersignalen für die Schalter der Phasenmodule und/oder Rückmeldesignale von den Phasenmodulen auf. Von Vorteil ist dabei, dass das Kopplungsmodul eine Leiterplatte umfasst, auf die die genannten Mittel vorsehbar sind und die Signale und/oder Daten in einfacher Weise an diese Mittel zuleitbar sind.

Bei einer vorteilhaften Ausgestaltung weist das Kopplungsmodul Mittel zum Vergleichen von Signalen des Bremschoppermoduls und/oder Rückmeldesignalen des Bremschoppermoduls auf. Von Vorteil ist dabei, dass die Funktion des Bremschoppermoduls ebenso wie die Funktion der anderen Module überwachbar ist und entsprechende Fehlermeldungen erzeugbar und anzeigbar sind.

Bei einer vorteilhaften Ausgestaltung sind Mittel zur Erfassung von Werten physikalischer Größen vorgesehen und das Kopplungsmodul umfasst Mittel zum Vergleich der Werte mit jeweiligen kritischen Werten. Von Vorteil ist dabei, dass die Mittel zur Erfassung von Werten auf oder an den jeweiligen Modulen vorsehbar sind und die zugehörige Auswertung auf dem mit dem Modul benachbarten, über die Schnittstelle verbundenen Kopplungsmodul ermöglicht ist.

Bei einer vorteilhaften Ausgestaltung umfasst das Kopplungsmodul Anzeigemittel zum Anzeigen von Fehlerzuständen und/oder zum Anzeigen von Hinweisen auf die Fehlerquelle. Von Vorteil ist dabei, dass bei Wartungsarbeiten auf das fehlerhafte Modul direkt hingewiesen wird und somit das Modul sofort ausgetauscht oder repariert werden kann.

Insbesondere erfolgt die Überwachung und Anzeige von Fehlern unabhängig vom komplex aufgebauten Steuerungselektronikmodul, welches zumindest einen Mikrocontroller umfasst und selbst eine Fehlerquelle darstellen kann.

Das Kopplungsmodul selbst hingegen ist in seiner ersten Funktion nur ein Mittel zum Durchleiten von Signalen und Daten. Die Überwachung ist eine zusätzliche auf dem Kopplungsmodul integrierte Funktion, die somit unabhängig von anderen Komponenten ausführbar ist. Insgesamt ist auf diese Weise auch die Sicherheit erhöhbar, da die Überwachung auf Fehler sogar unabhängig vom Kopplungsmodul auch zusätzlich in dem Steuerelektronikmodul ausführbar ist.

Bei einer vorteilhaften Ausgestaltung ist das Kopplungsmodul zum Datenaustausch mit dem Signalelektronikmodul verbunden. Von Vorteil ist dabei, dass die auf dem Kopplungsmodul erzeugten und bestimmten Informationen an das Steuerelektronikmodul weiterleitbar sind und somit von dort auch anzeigbar oder über Datenbusverbindungen an weitere elektronische Geräte weiterleitbar.

Bei einer vorteilhaften Ausgestaltung ist eine physikalische Größe die Temperatur einer Kühlvorrichtung des Umrichter, wie Kühlkörper oder in Leitungen vorgesehenes Kühlmedium.

Insbesondere ist eine physikalische Größe die Zwischenkreisspannung, ein Motorphasenstrom und/oder der Motorstrom und/oder der Nullpunkt der Motorspannung, also die zwischen Nullpunkt und Erde auftretende Spannung. Von Vorteil ist dabei, dass die Überwachung unabhängig vom Steuerelektronikmodul ausführbar ist und somit die Sicherheit erhöhbar ist.

Bei einer vorteilhaften Ausgestaltung umfasst das Phasenmodul jeweils zwei in Reihe geschaltete ansteuerbare Halbleiterschalter, wobei die Ansteuersignale vom Kopplungsmodul über die zweite Schnittstelle geleitet werden. Von Vorteil ist dabei, dass das Phasenmodul selbst mit dem Kühlkörper verbindbar und somit die von der Endstufe insgesamt erzeugte Wärme aufspreizbar ist. Denn die einzelnen Phasenmodule sind voneinander beabstandet vorsehbar und nicht integriert ausgeführt. Außerdem sind im Phasenmodul jeweilige Mittel zum Überwachen vorsehbar, deren Signale über die zweite Schnittstelle dem Kopplungsmodul zuleitbar sind. Auf diese Weise ist eine individuelle Überwachung jedes Phasenmoduls ausführbar. Des Weiteren ist jedes Phasenmodul zwischen Stromschienen befestigbar, welche die Zwischenkreispotentiale führen. Somit ist eine einfache Befestigung auch für hohe Ströme ausführbar.

Bei einer vorteilhaften Ausgestaltung sind auf dem Kopplungsmodul Mittel zur Überwachung der über die erste und zweite Schnittstelle ausgetauschten Daten und /oder Signale vorgesehen, die mit Mitteln zum Anzeigen von Fehlerzuständen und/oder Fehlerquellen, insbesondere von entsprechend zugeordneten Module, vorgesehen sind. Von Vorteil ist dabei, dass bei Wartungsarbeiten die Fehlerquelle und Fehlerart direkt und einfach anzeigbar ist.

Bei einer vorteilhaften Ausgestaltung sind die Schnittstellen als Steckverbindungen ausgeführt, wobei das Kopplungsmodul eine Leiterplatte umfasst, auf der Steckverbinderteile der Steckverbindungen der Schnittstellen verbunden sind, insbesondere lötverbunden sind. Von Vorteil ist dabei, dass einfache und kostengünstige Ausführungen ermöglicht sind. Insbesondere ist auch das Anschließen der Module in einfacher und schneller Weise ausführbar. Mittel der Steckverbinderteile sind auch Anschließfehler vermeidbar.

Weitere Vorteile ergeben sich aus den Unteransprüchen.

### Bezugszeichenliste

1 Steuerelektronikmodul
2 erste Schnittstelle
3 Kopplungsmodul
4 zweite Schnittstelle
5 Bremschoppermodul
6U Phasenmodul für die Motorphasenleitung U
6V Phasenmodul für die Motorphasenleitung V
6W Phasenmodul für die Motorphasenleitung W
R Bremswiderstand
M Dreiphasig betreibbarer Motor, Drehstrommotor

Die Erfindung wird nun anhand von Abbildungen näher erläutert:

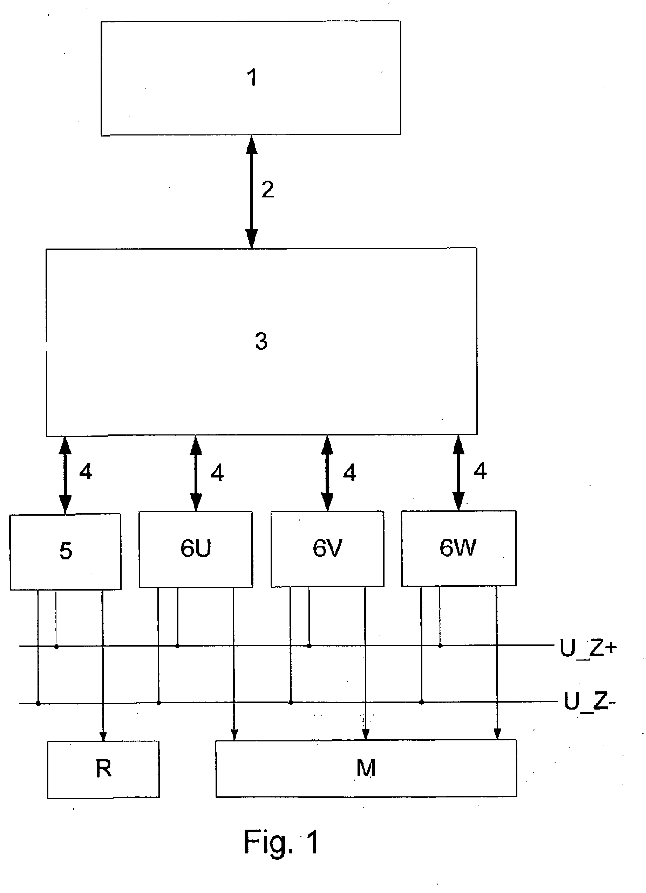

In der Figur 1 ist ein erfindungsgemäßer Umrichter schematisch dargestellt.

Dabei speist der Umrichter einen Motor M, der dreiphasig betreibbar ist, also ein Drehstrommotor ist. Hierbei ist ein Synchronmotor, ein Asynchronmotor oder ein Reluktanzmotor einsetzbar.

Der Umrichter wird vorzugsweise aus einer dreiphasigen Versorgungsspannungsquelle versorgt. Ein in Figur 1 nicht gezeigter Umrichter, der innerhalb des Leistungsmoduls angeordnet ist, erzeugt eine Zwischenkreisspannung, die zwischen dem oberen Zwischenkreispotential U_Z+ und dem unteren Zwischenkreispotential U_Z- anliegt. Eine Kapazität zur zumindest geringfügigen Glättung und als kurzzeitiger Energiepuffer ist bevorzugt an der Zwischenkreisspannung angeordnet.

Ein außerhalb des Umrichters angeordneter Bremswiderstand R wird zur Vernichtung überschüssiger Energie, insbesondere nach Übersteigen eines kritischen Wertes an Zwischenkreisspannung, mittels eines ansteuerbaren Schalters, im Folgenden auch als Brems-Chopper bezeichnet, zugeschaltet, so dass er im Wesentlichen direkt von der Zwischenkreisspannung versorgt wird und somit die überschüssige Energie in ohmsch erzeugte Wärme verwandelt.

Der Brems-Chopper ist in einem Bremschoppermodul 5 angeordnet.

Die Erzeugung der drei den Motor versorgenden Phasen wird in drei Phasenmodulen (6U, 6V, 6W) ausgeführt, wobei jedes Phasenmodul aus der Zwischenkreisspannung versorgt ist und jeweils zumindest zwei in Reihe geschaltete ansteuerbare Leistungshalbleiterschalter aufweist, so dass die jeweilige Phasenleitung (U, V, W) entweder mit dem oberen Zwischenkreispotential oder mit dem unteren verbindbar ist. Die Ansteuersignale werden pulsweitenmoduliert, so dass die drei Phasenleitungen dem Motor eine Drehspannung zur Verfügung stellen mit einer vorgebbaren Frequenz.

Die Ansteuersignale werden über die zweite Schnittstelle 4 vom Kopplungsmodul aus übertragen, wobei die ursprüngliche Erzeugung der Ansteuersignale in einem Steuerelektronikmodul 1 ausgeführt wird, das über eine erste Schnittstelle 2 mit dem Kopplungsmodul 3 verbunden ist.

Auch die Ansteuersignale für den im Bremschoppermodul vorgesehenen ansteuerbaren Schalter, also Brems-Chopper, wird vom Steuerelektronikmodul 1 erzeugt und über die erste Schnittstelle 2 zum Kopplungsmodul 3 und von dort über die zweite Schnittstelle 4 zum Bremschoppermodul 5 übertragen.

Es sind Mittel zur Erfassung der Zwischenkreisspannung und Mittel zur Erfassung der motorseitigen Ausgangsströme, also Stromwerte in den Phasenleitungen vorgesehen. Die erfassten Werte werden - insbesondere auch über die zweite Schnittstelle 4 - ebenfalls zum Kopplungsmodul 3 übertragen und von dort über die erste Schnittstelle 2 zum Steuerelektronikmodul 1.

Des Weiteren wird auch die Kühlkörpertemperatur einer Kühlvorrichtung erfasst und über das Kopplungsmodul 3 und die erste Schnittstelle 2 zum Steuerelektronikmodul 1 übertragen.

Die Kühlvorrichtung ist derart wärmeleitend mit den Leistungsschaltern der Phasenmodule und mit dem Leistungsschalter des Bremschoppermoduls verbunden, dass die von diesen erzeugte Verlustwärme an ein umgebendes Medium, wie Luft oder in Leitungen vorbeigeführte Kühlflüssigkeit, abführbar ist.

Das Kopplungsmodul umfasst auch eine Rechnereinheit, wie Mikrocontroller oder Mikroprozessor und überwacht die durchgeleiteten Signale. Insbesondere werden hierzu die Ansteuersignale für die Phasenmodule verglichen und bei Abweichungen vom Normalbetrieb Wammeldungen, insbesondere im Anbahnungszustand, oder Fehlermeldungen erzeugt. Zum Vergleich sind beispielsweise zu jedem Zeitintervall Summen und/oder Differenzen der Phasenpotentialwerte oder Phasenstromwerte gebildet. Dabei sind Abweichungen des gebildeten Ergebniswertes auf ein Überschreiten oder Unterschreiten von kritischen Werten überwacht. Ebenso ist aus diesen Messwerten eine Leistungsüberwachung des Motors ausführbar und auch hieraus bei Überschreiten kritischer Werte Fehlermeldungen erzeugbar. Des Weiteren sind nicht nur die zum jeweiligen Zeitintervall bestimmten Messwerte überwachbar sondern auch die zeitlichen Verläufe, insbesondere durch Bildung Zeitlicher Ableitungen, oder auch aus den zeitlichen Verläufen ermittelte Werte, wie gleitende Mittelwerte oder Integralwerte, überwachbar.

Diese Meldungen werden übermittelt ans Steuerelektronikmodul 1 und/oder angezeigt über auf dem Kopplungsmodul vorgesehene Anzeigemittel.

Ebenso sind die Meldungen vom Steuerelektronikmodul 1 und/oder von einem mit diesem verbundenen Rechner mit dessen Anzeigeeinheit anzeigbar.

Die übermittelten und/oder angezeigten Meldungen umfassen dabei jeweils Informationen, welche hinweisen auf das fehlerhafte Modul, wodurch Service- und Artungsarbeiten schneller und einfacher ausführbar sind..

Ebenso wird die Zwischenkreisspannung überwacht und bei Überschreiten eines ersten kritischen Wertes oder bei dauerhaftem Unterschreiten eines zweiten kritischen Wertes entsprechende Meldungen übertragen und/oder angezeigt. Ebenso werden Meldungen bei Überschreiten eines kritischen Wertes an Strom in den jeweiligen Phasenleitungen und/oder Temperatur des Kühlkörpers angezeigt und/oder übermittelt.

Auf diese Weise sind im Wartungsfall die Fehlerquelle wie beispielsweise die auszutauschenden Module schneller erkennbar.

Alle vorgenannten Module sind innerhalb eines Schaltschrankes oder eines Gehäuses angeordnet, insbesondere mit einem Schienensystem lösbar verbunden, wobei das Gehäuse Gehäuseteile umfasst, wobei am Schienensystem die Gehäuseteile befestigt sind.

In weiteren erfindungsgemäßen Ausführungsbeispielen ist der Gleichrichter steuerbar ausgeführt, umfasst also ansteuerbare und nicht ansteuerbare Leistungshalbleiterschalter, wie Thyristoren und Dioden, oder nur ansteuerbare Leistungshalbleiterschalter, wie Thyristoren oder IGBT.

## Patentansprüche

1. Umrichter zur Speisung eines einzigen, drei Motorzuleitungen, also Phasenleitungen, aufweisenden Motors (11),
umfassen
- ein Steuerelektronikmodul (1) zur Erzeugung von Ansteuersignalen für ansteuerbare Halbleiterschalter, insbesondere Leistungshalbleiterschalter,
- mit Phasenmodulen (6U, 6V, 6W) wobei jedes Phasenmodul mit einer einzigen der Motorzuleitungen verbunden und nur dieser zugeordnet ist, wobei jedes Phasenmodul aus einer Zwischenkreisspannung versorgt ist und jeweils zumindest zwei in Reihe geschaltete ansteuerbare Leistungshalbleiterschalter aufweist, so dass die jeweilige Phasenleitung (U, V, W) entweder mit dem oberen Zwischenkreispotential oder mit dem unteren verbindbar ist,
- ein Bremschoppermodul (5) mit ansteuerbarem Halbleiterschalter,
wobei
zwischen dem Steuerelektronikmodul (1) und einem Kopplungsmodul (3) eine erste Schnittstelle (2) zur Signalübermittelung vorgesehen ist
und zwischen dem Kopplungsmodul (3) und dem Bremschoppermodul (5) sowie zwischen dem Kopplungsmodul und jedem Phasenmodul jeweils eine zweite Schnittstelle (4) zur Signalübertragung ausgeführt ist,
wobei das Kopplungsmodul (3) Mittel zum Vergleichen von Ansteuersignalen für die Schalter der Phasenmodule und/oder Rückmeldesignale von den Phasenmodulen aufweist.

2. Umrichter nach mindestens einem der vorangegangenen Ansprüche,
**dadurch gekennzeichnet, dass**
die erste Schnittstelle zur Übertragung von Ansteuersignalen sowie zur Übertragung von Meldungen, insbesondere Fehlermeldungen, geeignet ausgeführt ist.

3. Umrichter nach mindestens einem der vorangegangenen Ansprüche,
**dadurch gekennzeichnet, dass**
die zweite Schnittstelle zur Übertragung von Ansteuersignalen sowie zur Übertragung von Meldungen, insbesondere Fehlermeldungen, geeignet ausgeführt ist.

4. Umrichter nach mindestens einem der vorangegangenen Ansprüche,
**dadurch gekennzeichnet, dass**

5. Umrichter nach mindestens einem der vorangegangenen Ansprüche,
**dadurch gekennzeichnet, dass**
das Kopplungsmodul Mittel zum Vergleichen von Signalen des Bremschoppermoduls und/oder Rückmeldesignalen des Bremschoppermoduls aufweist.

6. Umrichter nach mindestens einem der vorangegangenen Ansprüche,
**dadurch gekennzeichnet, dass**
Mittel zur Erfassung von Werten physikalischer Größen vorgesehen sind und dass das Kopplungsmodul Mittel zum Vergleich der Werte mit jeweiligen kritischen Werten umfasst.

7. Umrichter nach mindestens einem der vorangegangenen Ansprüche,
**dadurch gekennzeichnet, dass**
das Kopplungsmodul Anzeigemittel umfasst zum Anzeigen von Fehlerzuständen und/oder zum Anzeigen von Hinweisen auf die Fehlerquelle.

8. Umrichter nach mindestens einem der vorangegangenen Ansprüche,
**dadurch gekennzeichnet, dass**
das Kopplungsmodul zum Datenaustausch mit dem Signalelektronikmodul verbunden ist.

9. Umrichter nach mindestens einem der vorangegangenen Ansprüche,
**dadurch gekennzeichnet, dass**
eine physikalische Größe die Temperatur einer Kühlvorrichtung des Umrichter, wie Kühlkörper oder in Leitungen vorgesehenes Kühlmedium ist.

10. Umrichter nach mindestens einem der vorangegangenen Ansprüche,
**dadurch gekennzeichnet, dass**
eine physikalische Größe die Zwischenkreisspannung ist.

11. Umrichter nach mindestens einem der vorangegangenen Ansprüche,
**dadurch gekennzeichnet, dass**
eine physikalische Größe ein Motorphasenstrom und/oder der Motorstrom ist.

12. Umrichter nach mindestens einem der vorangegangenen Ansprüche,
**dadurch gekennzeichnet, dass**
eine physikalische Größe der Nullpunkt der Motorspannung, also die zwischen Nullpunkt und Erde auftretende Spannung, ist

13. Umrichter nach mindestens einem der vorangegangenen Ansprüche,
**dadurch gekennzeichnet, dass**
das Phasenmodul jeweils zwei in Reihe geschaltete ansteuerbare Halbleiterschalter umfasst, wobei die Ansteuersignale vom Kopplungsmodul über die zweite Schnittstelle geleitet werden.

14. Umrichter nach mindestens einem der vorangegangenen Ansprüche,
**dadurch gekennzeichnet, dass**
auf dem Kopplungsmodul Mittel zur Überwachung der über die erste und zweite Schnittstelle ausgetauschten Daten und /oder Signale vorgesehen sind, die mit Mitteln zum Anzeigen von Fehlerzuständen und/oder Fehlerquellen, insbesondere von entsprechend zugeordneten Module, vorgesehen sind.

15. Umrichter nach mindestens einem der vorangegangenen Ansprüche,
**dadurch gekennzeichnet, dass**
die Schnittstellen als Steckverbindungen ausgeführt sind, wobei das Kopplungsmodul eine Leiterplatte umfasst, auf der Steckverbinderteile der Steckverbindungen der Schnittstellen verbunden sind, insbesondere lötverbunden sind,
und/oder dass
die Schnittstellen durch flexible elektrische Leitungen ausgeführt sind.

## Claims

1. Converter for feeding a single motor (11) having three motor supply lines, i.e. phase lines,
comprising
- a control electronics module (1) for generating driving signals for drivable semiconductor switches, in particular power semiconductor switches,
- having phase modules (6U, 6V, 6W), each phase module being connected to a single one of the motor supply lines and assigned to this only, each phase module being supplied from an intermediate circuit voltage and having in each case at least two drivable power semiconductor switches connected in series, so that the respective phase line (U, V, W) is connectable either to the upper intermediate circuit potential or to the lower intermediate circuit potential,
- a braking chopper module (5) with drivable
semiconductor switches,
wherein
a first interface (2) for transmitting signals is provided between the control electronics module (1) and a coupling module (3)
and in each case a second interface (4) for transmitting signals is formed between the coupling module (3) and the braking chopper module (5) as well as between the coupling module and each phase module,
wherein the coupling module (3) has means for comparing driving signals for the switches of the phase modules and/or check-back signals from the phase modules.

2. Converter according to at least one of the preceding claims,
**characterised in that**
the first interface is configured to be suitable for transmitting driving signals and for transmitting messages, in particular fault messages.

3. Converter according to at least one of the preceding claims,
**characterised in that**
the second interface is configured to be suitable for transmitting driving signals and for transmitting messages, in particular fault messages.

4. Converter according to at least one of the preceding claims,
**characterised in that**

5. Converter according to at least one of the preceding claims,
**characterised in that**
the coupling module has means for comparing signals of the braking chopper module and/or check-back signals of the braking chopper module.

6. Converter according to at least one of the preceding claims,
**characterised in that**
means for acquiring values of physical quantities are provided and **in that** the coupling module comprises means for comparing the values with respective critical values.

7. Converter according to at least one of the preceding claims,
**characterised in that**
the coupling module comprises display means for displaying fault states and/or for displaying indications to the fault source.

8. Converter according to at least one of the preceding claims,
**characterised in that**
the coupling module is connected to the signal electronics module for data exchange.

9. Converter according to at least one of the preceding claims,
**characterised in that**
a physical quantity is the temperature of a cooling device of the converter, such as a cooling element, or a cooling medium provided in lines.

10. Converter according to at least one of the preceding claims,
**characterised in that**
a physical quantity is the intermediate circuit voltage.

11. Converter according to at least one of the preceding claims,
**characterised in that**
a physical quantity is a motor phase current and/or the motor current.

12. Converter according to at least one of the preceding claims,
**characterised in that**
a physical quantity is the zero point of the motor voltage, i.e. the voltage occurring between zero point and earth.

13. Converter according to at least one of the preceding claims,
**characterised in that**
the phase module comprises in each case two drivable semiconductor switches connected in series, the driving signals being transmitted from the coupling module via the second interface.

14. Converter according to at least one of the preceding claims,
**characterised in that**
means for monitoring the data and/or signals exchanged via the first and second interface are provided on the coupling module, which means are provided with means for displaying fault states and/or fault sources, in particular of correspondingly assigned modules.

15. Converter according to at least one of the preceding claims,
**characterised in that**
the interfaces are formed as plug connections, the coupling module comprising a printed circuit board on which plug connector parts of the plug connections of the interfaces are connected, in particular are connected by soldering,
and/or **in that**
the interfaces are formed by flexible electrical lines.

## Revendications

1. Variateur de vitesse destiné à l'alimentation d'un unique moteur (11) présentant trois lignes d'alimentation de moteur, c'est-à-dire lignes de phase,
comprenant
- un module électronique de commande (1) pour générer des signaux de commande pour des commutateurs à semi-conducteurs commandables, en particulier des commutateurs à semi-conducteurs de puissance,
- des modules de phase (6U, 6V, 6W), chaque module de phase étant connecté à une seule des lignes d'alimentation de moteur et associé seulement à celle-ci, chaque module de phase étant alimenté à partir d'une tension de circuit intermédiaire et présentant au moins deux commutateurs à semi-conducteurs de puissance commandables montés en série, de sorte que la ligne de phase respective (U, V, W) peut être reliée soit au potentiel de circuit intermédiaire supérieur, soit au potentiel de circuit intermédiaire inférieur,
- un module hacheur de freinage (5) avec un commutateur à semi-conducteurs
commandable,
dans lequel
une première interface (2) est prévue entre le module électronique de commande (1) et un module de couplage (3) pour la transmission de signaux
et une deuxième interface (4) est réalisée entre le module de couplage (3) et le module hacheur de freinage (5) ainsi qu'entre le module de couplage et chaque module de phase pour la transmission de signaux,
le module de couplage (3) présentant des moyens permettant de comparer des signaux de commande pour les commutateurs des modules de phase et/ou des signaux de retour des modules de phase.

2. Variateur de vitesse selon au moins une des revendications précédentes,
**caractérisé en ce que**
la première interface est réalisée de manière à permettre la transmission de signaux de commande ainsi que la transmission de messages, en particulier de messages d'erreur.

3. Variateur de vitesse selon au moins une des revendications précédentes,
**caractérisé en ce que**
la deuxième interface est réalisée de manière à permettre la transmission de signaux de commande ainsi que la transmission de messages, en particulier de messages d'erreur.

4. Variateur de vitesse selon au moins une des revendications précédentes,
**caractérisé en ce que**

5. Variateur de vitesse selon au moins une des revendications précédentes,
**caractérisé en ce que**
le module de couplage présente des moyens permettant de comparer des signaux du module hacheur de freinage et/ou des signaux de retour du module hacheur de freinage.

6. Variateur de vitesse selon au moins une des revendications précédentes,
**caractérisé en ce que**
des moyens sont prévus pour détecter des valeurs de grandeurs physiques et que le module de couplage comprend des moyens permettant de comparer les valeurs avec des valeurs critiques respectives.

7. Variateur de vitesse selon au moins une des revendications précédentes,
**caractérisé en ce que**
le module de couplage comprend des moyens d'affichage pour afficher des états d'erreur et/ou pour afficher des indications sur la source d'erreur.

8. Variateur de vitesse selon au moins une des revendications précédentes,
**caractérisé en ce que**
le module de couplage est relié au module électronique de signalisation pour l'échange de données.

9. Variateur de vitesse selon au moins une des revendications précédentes,
**caractérisé en ce que**
une grandeur physique est la température d'un dispositif de refroidissement du variateur de vitesse, comme un dissipateur thermique ou un fluide de refroidissement prévu dans des conduites.

10. Variateur de vitesse selon au moins une des revendications précédentes, **caractérisé en ce que**
une grandeur physique est la tension de circuit intermédiaire.

11. Variateur de vitesse selon au moins une des revendications précédentes, **caractérisé en ce que**
une grandeur physique est un courant de phase de moteur et/ou le courant de moteur.

12. Variateur de vitesse selon au moins une des revendications précédentes, **caractérisé en ce que**
une grandeur physique est le point zéro de la tension de moteur, donc la tension présente entre le point zéro et la terre.

13. Variateur de vitesse selon au moins une des revendications précédentes, **caractérisé en ce que**
le module de phase comprend chaque fois deux commutateurs à semi-conducteurs commandables montés en série, les signaux de commande étant transmis par le module de couplage via la deuxième interface.

14. Variateur de vitesse selon au moins une des revendications précédentes, **caractérisé en ce que**
sur le module de couplage sont prévus des moyens pour surveiller les données et/ou signaux échangés via la première et la deuxième interface, lesquels sont prévus avec des moyens pour afficher des états d'erreur et/ou des sources d'erreur, en particulier des modules associés de manière correspondante.

15. Variateur de vitesse selon au moins une des revendications précédentes, **caractérisé en ce que**
les interfaces sont réalisées sous la forme de connexions enfichables, le module de couplage comprenant une carte de circuit imprimé sur laquelle des éléments de connecteur des connexions enfichables des interfaces sont connectés, en particulier soudés,
et/ou que
les interfaces sont réalisées sous la forme de câbles électriques souples.
